# EUROPEAN PATENT APPLICATION

(11) **EP 4 661 507 A1**
(43) Date of publication of application: **10.12.2025**
(21) Application number: 23918950.9
(22) Date of filing: 30.01.2023
(51) Int. Cl.: H04W 52/02

(54) **MONITORING OR TRANSMITTING METHOD AND DEVICE, APPARATUS, AND READABLE STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Dehns Germany Partnerschaft mbB
(86) International application number: PCT/CN2023/073858
(87) International publication number: WO 2024/159360

(57) **Abstract**

The present disclosure provides a monitoring or transmitting method, a device, an apparatus, and a readable storage medium, which are applied in the technical field of wireless communication. A monitoring method, executed by user equipment, comprises: in a first overlapping duration, not monitoring set downlink information on a carrier used during an off duration of a discontinuous transmission (DTX) mechanism of a network device, the first overlapping duration being an overlapping region of a first duration and a second duration, the first duration being an off duration of discontinuous transmission (DTX) of the network device, and the second duration being an on duration of connected mode discontinuous reception (C-DRX) of the user equipment.

## Description

### TECHNICAL FIELD

The present disclosure relates to the wireless communication technical field, and in particular to a monitoring or sending method and device, an apparatus and a readable storage medium.

### BACKGROUND

In order to save energy consumption of a network device, the network device may adopt Discontinuous Transmission (DTX). The DTX technology includes two durations: one is called an on duration of the DTX, namely a DTX-On duration, and the other is called an off duration of the DTX, namely a DTX-Off duration. When the network device adopts the DTX, the network device sends downlink information normally in the DTX-On duration, and does not send a part of the downlink information in the DTX-Off duration.

In order to save energy consumption of User Equipment (UE), the UE may adopt a Connected mode Discontinuous Reception (C-DRX) technology. In the C-DRX technology, one cycle includes two durations: one is called an on duration and the other is called an off duration. When the on duration arrives, the UE starts monitoring of set downlink information, and when the monitoring ends or the on duration ends and the off duration arrives, the UE enters a sleep state. In this way, unnecessary monitoring of the UE can be reduced, thereby saving energy.

It is needed to consider how to effectively complete monitoring when the network device adopts the DTX and the UE adopts the C-DRX.

### SUMMARY

The present disclosure provides a monitoring or sending method and device, an apparatus and a readable storage medium.

According to a first aspect, a monitoring method is provided. The method is performed by user equipment. The method includes:
in a first overlapping duration, not monitoring set downlink information on a carrier to which an off duration of a Discontinuous Transmission (DTX) mechanism of a network device is applied, wherein the first overlapping duration is an overlapping region between a first duration and a second duration, the first duration is the off duration of the Discontinuous Transmission (DTX) of the network device, and the second duration is an active duration of a Connected mode Discontinuous Reception (C-DRX) of the user equipment.

In some possible implementations, the method further includes:
in a second overlapping duration, monitoring the set downlink information, wherein the second overlapping duration is an overlapping region between a third duration and the second duration, and the third duration is an on duration of the DTX.

In some possible implementations, the set downlink information includes at least one of: a Physical Downlink Control Channel (PDCCH), a Channel-State-Information Reference Signal (CSI-RS), a Semi-Persistent Scheduling-Physical Downlink Shared Channel (SPS-PDSCH).

In some possible implementations, the PDCCH is a PDCCH transmitted in a Type# 3 Common Search Space (CSS) and a User equipment specific Search Space (USS).

In some possible implementations, the method further includes:
in a third overlapping duration, not monitoring set Downlink Control Information (DCI) in the third overlapping region, wherein the third overlapping duration is an overlapping region between the first duration and a fourth duration, and the fourth duration is a duration for the user equipment to monitor the set DCI.

In some possible implementations, the method further includes:
according to indication information sent by the network device, determining whether to start an on duration of the C-DRX corresponding to a monitoring occasion of the set DCI.

In some possible implementations, the method further includes:
receiving higher layer signaling sent by the network device, wherein the higher layer signaling includes the indication information.

In some possible implementations, the method further includes:
not starting the on duration of the C-DRX on the carrier to which the off duration of the DTX of the network device is applied.

In some possible implementations, the method further includes:
an end time of the off duration of the DTX of the network device being equal to or later than an end time of the on duration of the C-DRX corresponding to the monitoring occasion of the set DCI, not starting the on duration of the C-DRX corresponding to the monitoring occasion of the set DCI.

In some possible implementations, the set DCI is used to carry a wake-up indication.

In some possible implementations, the method further includes:
in response to not monitoring the set DCI in the third overlapping region, not starting the on duration of the C-DRX on all carriers to which the wake-up indication is applied.

In some possible implementations, the set DCI is DCI 2-6.

In some possible implementations, the method further includes:
running a timer in the C-DRX in the first overlapping duration.

According to a second aspect, a sending method is provided. The method is performed by a network device. The method includes:
in a first overlapping duration, not sending set downlink information on a carrier to which an off duration of a Discontinuous Transmission (DTX) mechanism of the network device is applied, wherein the first overlapping duration is an overlapping region between a first duration and a second duration, the first duration is the off duration of the Discontinuous Transmission (DTX) of the network device, and the second duration is an active duration of a Connected mode Discontinuous Reception (C-DRX) of user equipment.

In some possible implementations, the method further includes:
in a second overlapping duration, sending the set downlink information, wherein the second overlapping duration is an overlapping region between a third duration and the second duration, and the third duration is an on duration of the DTX.

In some possible implementations, the set downlink information includes at least one of: a Physical Downlink Control Channel (PDCCH), a Channel-State-Information Reference Signal (CSI-RS), a Semi-Persistent Scheduling-Physical Downlink Shared Channel (SPS-PDSCH).

In some possible implementations, the PDCCH is a PDCCH transmitted in a Type# 3 Common Search Space (CSS) and a User equipment specific Search Space (USS).

In some possible implementations, the method further includes:
in a third overlapping duration, not sending set Downlink Control Information (DCI) in the third overlapping region, wherein the third overlapping duration is an overlapping region between the first duration and a fourth duration, and the fourth duration is a duration for the user equipment to monitor the set DCI.

In some possible implementations, the method further includes:
sending indication information to the user equipment, wherein the indication information is used for the user equipment to determine whether to start an on duration of the C-DRX corresponding to a monitoring occasion of the set DCI.

In some possible implementations, sending the indication information to the user equipment includes:
sending higher layer signaling to the user equipment, wherein the higher layer signaling includes the indication information.

In some possible implementations, the set DCI is used to carry a wake-up indication.

In some possible implementations, the set DCI is DCI 2-6.

According to a third aspect, a monitoring apparatus is provided. The apparatus is configured in user equipment. The apparatus includes:
a transceiving module configured to, in a first overlapping duration, not monitor set downlink information on a carrier to which an off duration of a Discontinuous Transmission (DTX) mechanism of a network device is applied, wherein the first overlapping duration is an overlapping region between a first duration and a second duration, the first duration is the off duration of the Discontinuous Transmission (DTX) of the network device, and the second duration is an active duration of a Connected mode Discontinuous Reception (C-DRX) of the user equipment.

According to a fourth aspect, a sending apparatus is provided. The apparatus is configured in a network device. The apparatus includes:
a transceiving module configured to, in a first overlapping duration, not send set downlink information on a carrier to which an off duration of a Discontinuous Transmission (DTX) mechanism of the network device is applied, wherein the first overlapping duration is an overlapping region between a first duration and a second duration, the first duration is the off duration of the Discontinuous Transmission (DTX) of the network device, and the second duration is an active duration of a Connected mode Discontinuous Reception (C-DRX) of user equipment.

According to a fifth aspect, an electronic device is provided, including a processor and a memory, wherein:
the memory is configured to store computer programs;
the processor is configured to execute the computer programs to implement the design according to the first aspect or any possible implementation of the first aspect.

According to a sixth aspect, an electronic device is provided, including a processor and a memory, wherein:
the memory is configured to store computer programs;
the processor is configured to execute the computer programs to implement the design according to the second aspect or any possible implementation of the second aspect.

According to a seventh aspect, a computer-readable storage medium is provided. Instructions are stored in the computer-readable storage medium, and when the instructions are invoked and executed on a computer, the computer is caused to implement the design according to the first aspect or any possible implementation of the first aspect.

According to an eighth aspect, a computer-readable storage medium is provided. Instructions are stored in the computer-readable storage medium, and when the instructions are invoked and executed on a computer, the computer is caused to implement the design according to the second aspect or any possible implementation of the second aspect.

In the present disclosure, when the network device adopts the DTX and the UE adopts the C-DRX, considering that the first overlapping duration is located in the off duration of the DTX of the network device, that is, the network device does not send the set downlink information in the first overlapping duration, and the UE does not monitor the set downlink information in the first overlapping duration. Thus, the UE's monitoring behavior without a monitoring result in the first overlapping duration can be avoided, thereby saving the energy consumption of the UE.

### BRIEF DESCRIPTION OF THE DRAWINGS

The drawings described herein are used to provide a further understanding of the embodiments of the present disclosure and constitute a part of the application. The illustrative embodiments of the embodiments of the present disclosure and their descriptions are used to explain the embodiments of the present disclosure and do not constitute an improper limitation on the embodiments of the present disclosure. In the drawings:

The accompanying drawings herein, which are incorporated in and constitute a part of the specification, illustrate embodiments consistent with the embodiments of the present disclosure, and together with the specification, serve to explain the principles of the embodiments of the present disclosure.
FIG. 1 is a schematic diagram of a wireless communication system architecture provided by an embodiment of the present disclosure;
FIG. 2 is a schematic diagram of a C-DRX cycle provided by an embodiment of the present disclosure;
FIG. 3 is a flowchart of a monitoring method provided by an embodiment of the present disclosure;
FIG. 4 is a flowchart of a sending method provided by an embodiment of the present disclosure;
FIG. 5 is a flowchart of another monitoring method provided by an embodiment of the present disclosure;
FIG. 6 is a flowchart of another sending method provided by an embodiment of the present disclosure;
FIG. 7 is a flowchart of another monitoring method provided by an embodiment of the present disclosure;
FIG. 8 is a flowchart of another sending method provided by an embodiment of the present disclosure;
FIG. 9 is a structural diagram of a monitoring apparatus provided by an embodiment of the present disclosure;
FIG. 10 is a structural diagram of another monitoring apparatus provided by an embodiment of the present disclosure;
FIG. 11 is a structural diagram of a sending apparatus provided in an embodiment of the present disclosure;
FIG. 12 is a structural diagram of another sending apparatus provided in an embodiment of the present disclosure.

### DETAILED DESCRIPTION

Embodiments of the present disclosure are now further described in conjunction with the accompanying drawings and specific implementations.

Example embodiments will be described in detail herein, examples of which are shown in the accompanying drawings. When the following description refers to the drawings, the same numbers in different drawings represent the same or similar elements unless otherwise indicated. The implementations described in the following example embodiments do not represent all implementations consistent with the embodiments of the present disclosure. Instead, they are merely examples of apparatuses and methods consistent with some aspects of the present disclosure as detailed in the appended claims.

The terms used in the embodiments of the present disclosure are only for the purpose of describing specific embodiments and are not intended to limit the embodiments of the present disclosure. The singular forms of "a", "an" and "the" used in the embodiments of the present disclosure and the appended claims are also intended to include plural forms unless the context clearly indicates other meanings. It should also be understood that the term "and/or" used herein refers to and includes any or all possible combinations of one or more associated listed items.

It should be understood that although the terms first, second, third, etc. may be used to describe various information in the embodiments of the present disclosure, the information should not be limited to these terms. These terms are only used to distinguish the same type of information from each other. For example, without departing from the scope of the embodiments of the present disclosure, first indication information may also be referred to as second indication information, and similarly, second indication information may also be referred to as first indication information. Depending on the context, the words "if' and "in a case" as used herein may be interpreted as "when" or "at the time of' or "in response to determining...".

The embodiments of the present disclosure are described in detail below, and examples of the embodiments are shown in the accompanying drawings, in which the same or similar reference numerals throughout represent the same or similar elements. The embodiments described below with reference to the accompanying drawings are illustrative and are intended to be used to interpret the present disclosure, and cannot be understood as limiting the present disclosure.

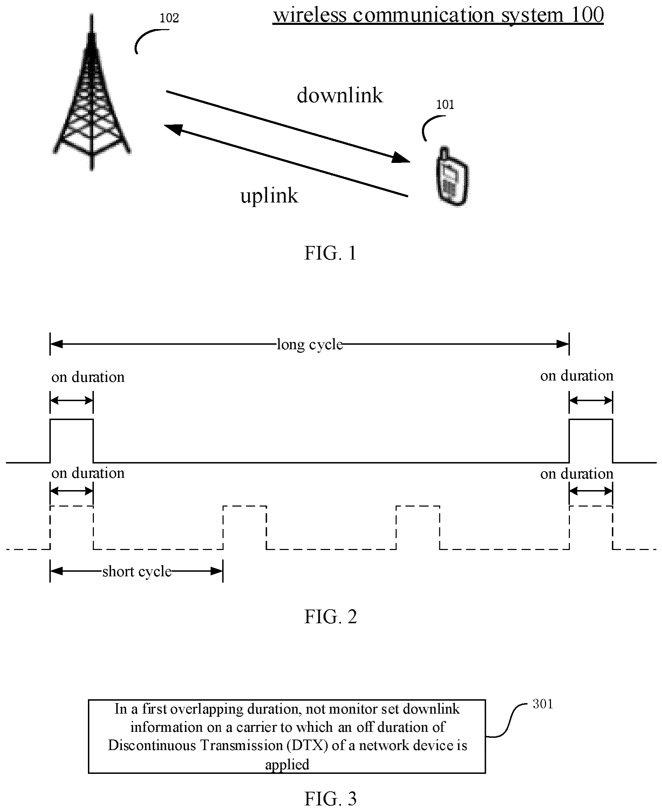

As shown in FIG. 1, the methods provided in the embodiments of the present disclosure may be applied to a wireless communication system 100, which may include user equipment 101 and network device(s) 102, and the number of the devices included is not limited.

It should be understood that the wireless communication system 100 may be applied to both a low-frequency scenario and a high-frequency scenario. Application scenarios of the wireless communication system 100 include, but are not limited to, a Long Term Evolution (LTE) system, a LTE Frequency Division Duplex (FDD) system, a LTE Time Division Duplex (TDD) system, a worldwide interoperability for micro wave access (WiMAX) communication system, a Cloud Radio Access Network (CRAN) system, a future fifth-generation (5G) system, a New Radio (NR) communication system, or a future evolved Public Land Mobile Network (PLMN) system, etc.

The user equipment 101 shown above may be a terminal, access user equipment, user equipment unit, user equipment station, a Mobile Station (MS), a remote station, remote user equipment, mobile user equipment (mobile terminal), a wireless communication device, a user equipment agent, etc. The user equipment 101 may have a wireless transceiving function, and it may communicate with one or more network devices of one or more communication systems (such as wireless communication) and receive network service(s) provided by the network device(s), where the network devices include but are not limited to the network device 102 illustrated in the figure.

The user equipment 101 may be a cellular phone, a cordless phone, a Session Initiation Protocol (SIP) phone, a Wireless Local Loop (WLL) station, a Personal Digital Assistant (PDA) device, a handheld device with a wireless communication function, a computing device or other processing device connected to a wireless modem, a vehicle-mounted device, a wearable device, user equipment in a future 5G network, or user equipment in a future evolved PLMN network, etc.

For example, the network device 102 may be an access network device (or access network point). The access network device refers to a device that provides a network access function, such as a Radio Access Network (RAN) base station, etc. Specifically, it may include a Base Station (BS), or a base station and a wireless resource management device for controlling the base station, etc. It may also include a relay station (relay device), an access point, and a base station in a future 5G network, a base station in a future evolved PLMN network, or an NR base station, etc. It may be a wearable device or an vehicle-mounted device. The network device 102 may also be a communication chip with a communication module.

FIG. 2 is a schematic diagram of a C-DRX cycle provided by an embodiment of the present disclosure. As shown in FIG. 2, the upper half of FIG. 2 is a schematic diagram of the cycle of long cycle C-DRX, and the lower half of FIG. 2 is a schematic diagram of the cycle of short cycle C-DRX nested in the long cycle. In the short cycle, the On Duration appears more frequently than in the long cycle. If a UE is configured with both long cycle C-DRX and short cycle C-DRX, after the short cycle C-DRX is started, monitoring is performed according to the long cycle C-DRX after a timer (drx-ShortCycleTimer) of the short cycle C-DRX expires.

Multiple types of timers are configured in C-DRX, and four of them are introduced as examples below.

The first type: DRX on duration timer (drx-onDurationTimer), which is used to calculate the duration of the on duration in a C-DRX cycle. The UE starts the timer every time the on duration arrives.

The second type: DRX inactivity duration timer (drx-InactivityTimer), which is used to calculate the duration of the UE after receiving a PDCCH indicating a new uplink or downlink transmission. The UE starts the timer every time the UE receives a DCI for scheduling a new uplink or downlink data transmission.

The third type: DRX downlink retransmission timer (drx-RetransmissionTimerDL), which is used to calculate, in a downlink Hybrid Automatic Repeat Request (HARQ) process, the maximum duration from receipt of data of the process to completion of the reception of downlink retransmission data of the process. For each downlink HARQ process, if a DRX downlink HARQ round-trip delay timer (drx-HARQ-RTT-TimerDL) ends and the UE feedbacks NACK, the timer is started. During the running time of this timer, the UE needs to monitor the PDCCH to obtain downlink data retransmission scheduling information.

The fourth type: DRX uplink retransmission timer (drx-RetransmissionTimerUL), which is used to calculate, in an uplink HARQ process, the maximum duration from receipt of data of the process to completion of reception of an uplink grant of the process. For each uplink HARQ process, if a DRX uplink HARQ round-trip delay timer (drx-HARQ-RTT-Timer UL) ends, this timer is started. During the running time of this timer, the UE needs to monitor the PDCCH to obtain possible uplink data retransmission scheduling information.

In the C-DRX technology, the UE remains an active state throughout the entire on duration. In addition, it is also required to remain the active state when the drx-InactivityTimer, the drx-RetransmissionTimerDL/, and drx-RetransmissionTimerUL are running. The duration during which the UE remains the active state may be called an active duration. In a C-DRX cycle, the active duration includes the on duration.

When the network device adopts DTX and the UE adopts C-DRX, in order to effectively complete monitoring, it is needed to consider a situation where the DTX mechanism and the C-DRX mechanism run together.

An embodiment of the present disclosure provides a monitoring method. The method is performed by a UE. FIG. 3 is a flowchart of a monitoring method according to an example embodiment. As shown in FIG. 3, the method includes S301:
In S301, in a first overlapping duration, set downlink information is not monitored on a carrier to which an off duration of DTX of a network device is applied.

The first overlapping duration is an overlapping region between a first duration and a second duration, the first duration is the off duration of the DTX of the network device, and the second duration is an active duration of C-DRX of the UE.

In some possible implementations, the set downlink information is monitored in a second overlapping duration. The second overlapping duration is an overlapping region between a third duration and the second duration, and the third duration is an on duration of the DTX of the network device.

In some possible implementations, the network device is a network device that manages a serving cell of the UE.

In some possible implementations, the set downlink information includes at least one of the following: a Physical Downlink Control Channel (PDCCH), a Channel-State-Information Reference Signal (CSI-RS), a Semi-Persistent Scheduling-Physical Downlink Control Channel (SPS-PDSCH).

In some possible implementations, the set downlink information is a PDCCH transmitted in a Type# 3 Common Search Space (CSS) and a user equipment specific search space (UE-specific Search Space, USS).

The Type # 3 CSS is a CSS configured by the network device for the UE after the UE enters a Radio Resource Control (RRC) connected state. The USS is a UE-specific search space configured by the network device for the UE. The CSS may be used to send broadcast, multicast, or unicast downlink control information, and the USS may be used to send UE-specific downlink control information.

In some possible implementations, a timer in the C-DRX is run in the first overlapping duration.

In some possible implementations, the off duration of the DTX of the network device does not affect the running of the timer in the C-DRX. That is, the DTX mechanism of the network device and the timer mechanism of the C-DRX of the UE are operated independently of each other and do not affect each other.

In the embodiment of the present disclosure, when the network device adopts the DTX and the UE adopts the C-DRX, considering that the first overlapping duration is located in the off duration of DTX of the network device, that is, the network device does not send the set downlink information in the first overlapping duration, and the UE does not monitor the set downlink information in the first overlapping duration. In this way, the UE's monitoring behavior without a monitoring result in the first overlapping duration can be avoided, thereby saving the energy consumption of the UE.

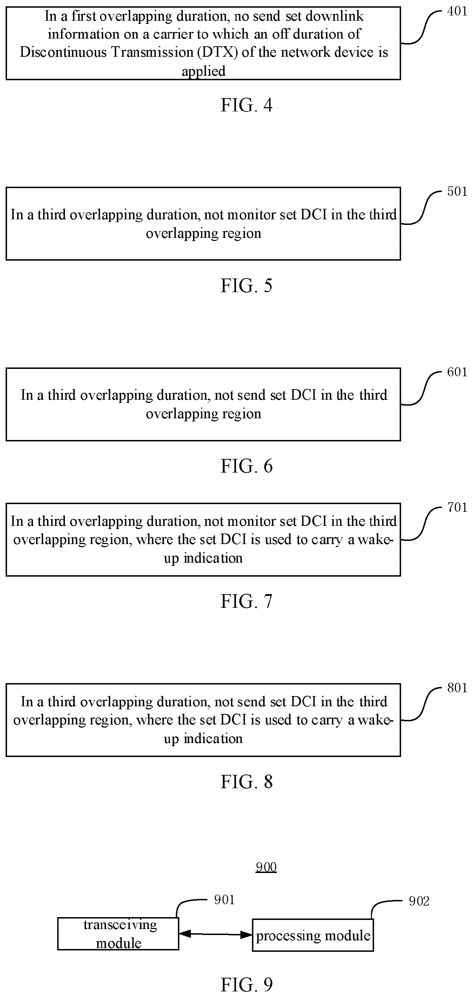

An embodiment of the present disclosure provides a sending method. The method is performed by a network device. FIG. 4 is a flowchart of a sending method according to an example embodiment. As shown in FIG. 4, the method includes S401:
In S401, in a first overlapping duration, set downlink information is not sent on a carrier to which an off duration of DTX of the network device is applied.

The first overlapping duration is an overlapping region between a first duration and a second duration, the first duration is the off duration of the DTX of the network device, and the second duration is an active duration of C-DRX of the UE.

In some possible implementations, the set downlink information is sent in a second overlapping duration. The second overlapping duration is an overlapping region between a third duration and the second duration, and the third duration is an on duration of the DTX of the network device.

In some possible implementations, the network device is a network device that manages a serving cell of the UE.

In some possible implementations, the set downlink information includes at least one of the following: a Physical Downlink Control Channel (PDCCH), a Channel-State-Information Reference Signal (CSI-RS), and a Semi-Persistent Scheduling-Physical Downlink Control Channel (SPS-PDSCH).

In some possible implementations, the set downlink information is a PDCCH transmitted in Type# 3 CSS and USS.

In some possible implementations, the off duration of the DTX of the network device does not affect the running of a timer in the C-DRX. That is, the DTX mechanism of the network device and the timer mechanism of the C-DRX of the UE are operated independently of each other and do not affect each other.

In the embodiment of the present disclosure, when the network device adopts the DTX and the UE adopts the C-DRX, considering that the first overlapping duration is located in the off duration of the DTX of the network device, the network device does not send the set downlink information in the first overlapping duration, thereby saving the energy consumption of the network device. And, a prerequisite is provided for the UE not to monitor the set downlink information in the first overlapping duration, thereby avoiding the UE's monitoring behavior without a monitoring result in the first overlapping duration, and thus saving the energy consumption of the UE.

It may be considered in some possible implementations that the network device may send Downlink Control Information (DCI) to the UE, for example, the network device may send the DCI before an on duration of the C-DRX. The DCI is used to indicate whether to start an on duration of the C-DRX after the DCI.

An embodiment of the present disclosure provides a monitoring method. The method is performed by a UE. FIG. 5 is a flowchart of a monitoring method according to an example embodiment. As shown in FIG. 5, the method includes S501:
In S501, in a third overlapping duration, a set DCI is not monitored in a third overlapping region.

The third overlapping duration is an overlapping region between the first duration and a fourth duration, and the fourth duration is a duration for the user equipment to monitor the set DCI.

In some possible implementations, in a case where the set DCI in the third overlapping region is not monitored in the third overlapping duration, whether to start an on duration of the C-DRX corresponding to a monitoring occasion of the set DCI is determined according to indication information sent by the network device.

In an example, higher layer signaling sent by the network device is received, where the higher layer signaling includes the indication information.

In some possible implementations, in a case where the set DCI in the third overlapping region is not monitored in the third overlapping duration, the on duration of the C-DRX is not started on a carrier to which the off duration of the Discontinuous Transmission (DTX) mechanism of the network device is applied.

In some possible implementations, in a case where the set DCI in the third overlapping region is not monitored in the third overlapping duration, and in a case where an end time of the off duration of the DTX of the network device is equal to or later than an end time of the on duration of the C-DRX corresponding to the monitoring occasion of the set DCI, the on duration of the C-DRX corresponding to the monitoring occasion of the set DCI is not started.

In some possible implementations, a timer in the C-DRX is run in the third overlapping duration.

In some possible implementations, the off duration of the DTX of the network device does not affect running of a timer in the C-DRX. That is, the DTX mechanism of the network device and the timer mechanism of the C-DRX of the UE are operated independently of each other and do not affect each other.

In the embodiment of the present disclosure, when the network device adopts the DTX and the UE adopts the C-DRX, considering that the third overlapping duration is located in off duration of the DTX of the network device, that is, the network device does not send the set DCI in the third overlapping duration, and the UE does not monitor the set DCI in the third overlapping duration. In this way, the UE's monitoring behavior without a monitoring result in the first overlapping duration can be avoided, thereby saving the energy consumption of the UE.

An embodiment of the present disclosure provides a sending method. The method is performed by a network device. FIG. 6 is a flowchart of a sending method according to an example embodiment. As shown in FIG. 6, the method includes S601:
In S601, in a third overlapping duration, the set DCI is not sent in a third overlapping region.

The third overlapping duration is an overlapping region between the first duration and a fourth duration, and the fourth duration is a duration for the user equipment to monitor the set DCI.

In some possible implementations, in a case where the set DCI in the third overlapping region is not sent in the third overlapping duration, indication information is sent to the user equipment. The indication information is used for the UE to determine whether to start an on duration of the C-DRX corresponding to a monitoring occasion of the set DCI.

In an example, higher layer signaling is sent to the user equipment, where the higher layer signaling includes the indication information.

In some possible implementations, the off duration of the DTX of the network device does not affect the running of a timer in the C-DRX. That is, the DTX mechanism of the network device and the timer mechanism of the C-DRX of the UE are operated independently of each other and do not affect each other.

In the embodiment of the present disclosure, when the network device adopts the DTX and the UE adopts the C-DRX, considering that the third overlapping duration is located in the off duration of the DTX of the network device, the network device does not send the set DCI in the third overlapping duration, thereby saving the energy consumption of the network device. And, a prerequisite is provided for the UE not to monitor the set DCI in the third overlapping duration, thereby avoiding the UE's monitoring behavior without a monitoring result in the third overlapping duration, and thus saving the energy consumption of the UE.

It may be considered in some possible implementations that the network device may send a DCI carrying a wake-up indication to the UE. For example, the DCI carrying the wake-up indication may be sent before an on duration of the C-DRX. When the wake-up indication indicates the UE to wake up, the UE wakes up in the first on duration after the wake-up indication, and when the wake-up indication indicates the UE not to wake up, the UE continues a sleep state in the first on duration after the wake-up indication.

An embodiment of the present disclosure provides a monitoring method. The method is performed by a UE. FIG. 7 is a flowchart of a monitoring method according to an example embodiment. As shown in FIG. 7, the method includes S701:
In S701, in a third overlapping duration, a set DCI in a third overlapping region is not monitored. The set DCI is used to carry a wake-up indication.

The third overlapping duration is an overlapping region between the first duration and a fourth duration, and the fourth duration is a duration for the user equipment to monitor the set DCI.

In some possible implementations, the set DCI is DCI 2-6.

In some possible implementations, in a case where the set DCI in the third overlapping region is not monitored in the third overlapping duration, the on duration of the C-DRX is not started on all carriers to which the wake-up indication is applied.

In some possible implementations, in a case where the set DCI in the third overlapping region is not monitored in the third overlapping duration, whether to start the on duration of the C-DRX corresponding to the monitoring occasion of the set DCI is determined according to indication information sent by the network device.

In an example, higher layer signaling sent by the network device is received, where the higher layer signaling includes the indication information.

In some possible implementations, in a case where the set DCI in the third overlapping region is not monitored in the third overlapping duration, the on duration of the C-DRX is not started on a carrier to which the off duration of the DTX of the network device is applied.

In some possible implementations, in a case where the set DCI in the third overlapping region is not monitored in the third overlapping duration and an end time of the off duration of the DTX of the network device is equal to or later than an end time of the on duration of the C-DRX corresponding to the monitoring occasion of the set DCI, the on duration of the C-DRX corresponding to the monitoring occasion of the set DCI is not started.

In some possible implementations, a timer in the C-DRX is run in the third overlapping duration.

In some possible implementations, the off duration of the DTX of the network device does not affect the running of a timer in the C-DRX. That is, the DTX mechanism of the network device and the timer mechanism of the C-DRX of the UE are operated independently of each other and do not affect each other.

In the embodiment of the present disclosure, when the network device adopts the DTX and the UE adopts the C-DRX, considering that the third overlapping duration is located in the off duration of the DTX of the network device, that is, the network device does not send the set DCI carrying the wake-up signal in the third overlapping duration, and the UE does not monitor the set DCI in the third overlapping duration. In this way, the UE's monitoring behavior without a monitoring result in the first overlapping duration can be avoided, and UE can be prevented from being awakened, thereby saving the energy consumption of the UE.

An embodiment of the present disclosure provides a sending method. The method is performed by a network device. FIG. 8 is a flowchart of a sending method according to an example embodiment. As shown in FIG. 8, the method includes S801:
In S801, a set DCI in the third overlapping region is not sent in the third overlapping duration, where the set DCI is used to carry a wake-up indication.

The third overlapping duration is an overlapping region between the first duration and a fourth duration, and the fourth duration is a duration for the user equipment to monitor the set DCI.

In some possible implementations, the set DCI is DCI 2-6.

In some possible implementations, in a case where the set DCI in the third overlapping region is not sent in the third overlapping duration, indication information is sent to the user equipment. The indication information is used for the UE to determine whether to start the on duration of the C-DRX corresponding to a monitoring occasion of the set DCI.

In an example, higher layer signaling is sent to the user equipment, where the higher layer signaling includes the indication information.

In some possible implementations, the off duration of the DTX of the network device does not affect running of a timer in the C-DRX. That is, the DTX mechanism of the network device and the timer mechanism of the C-DRX of the UE are operated independently of each other and do not affect each other.

In the embodiment of the present disclosure, when the network device adopts the DTX and the UE adopts the C-DRX, considering that the third overlapping duration is located in the off duration of the DTX of the network device, the network device does not send the set DCI carrying the wake-up signal in the third overlapping duration, thereby saving energy consumption of the network device. And, a prerequisite is provided for the UE not to monitor the set DCI in the third overlapping duration. In this way, the UE's monitoring behavior without a monitoring result in the first overlapping duration can be avoided, and the UE can be prevented from being awaken, thereby saving energy consumption of the UE.

An embodiment of the present disclosure provides a monitoring method, which is performed by a UE. The method includes: in a case where a network device uses DTX, not performing configured C-DRX, that is, ignoring the configured C-DRX, that is, disabling the configured C-DRX.

Based on the same concept as the above method embodiments, an embodiment of the present disclosure also provides a communication apparatus. The communication apparatus may have the function(s) of the user equipment in the above method embodiments, and is configured to perform the steps performed by the user equipment provided in the above embodiments. The function(s) may be implemented by hardware, or by software or hardware executing corresponding software. The hardware or software includes one or more modules corresponding to the above function(s).

In a possible implementation, a communication apparatus 900 shown in FIG. 9 may be used as the user equipment involved in the above method embodiments, and may perform the steps performed by the user equipment in the above method embodiments.

The communication device 900 includes a transceiving module 901 and a processing module 902.

The transceiving module 901 is configured to, in a first overlapping duration, not monitor set downlink information on a carrier to which an off duration of a Discontinuous Transmission (DTX) mechanism of the network device is applied. The first overlapping duration is an overlapping region between a first duration and a second duration, the first duration is the off duration of the Discontinuous Transmission (DTX) of the network device, and the second duration is an active duration of a Connected mode Discontinuous Reception (C-DRX) of the user equipment.

In a possible implementation, the transceiving module 901 is further configured to monitor the set downlink information in a second overlapping duration. The second overlapping duration is an overlapping region between a third duration and the second duration, and the third duration is an on duration of the DTX.

In a possible implementation, the set downlink information includes at least one of the following: a Physical Downlink Control Channel (PDCCH), a Channel-State-Information Reference Signal (CSI-RS), a Semi-Persistent Scheduling-Physical Downlink Shared Channel (SPS-PDSCH).

In a possible implementation, the PDCCH is a PDCCH transmitted in a Type# 3 Common Search Space (CSS) and a User equipment specific Search Space (USS).

In a possible implementation, the transceiving module 901 is further configured to, in a third overlapping duration, not monitor set Downlink Control Information (DCI) in a third overlapping region. The third overlapping duration is an overlapping region between the first duration and a fourth duration, and the fourth duration is a duration for the user equipment to monitor the set DCI.

In a possible implementation, the processing module 902 is configured to determine whether to start an on duration of the C-DRX corresponding to a monitoring occasion of the set DCI according to indication information sent by a network device.

In a possible implementation, the transceiving module 901 is further configured to receive higher layer signaling sent by the network device, where the higher layer signaling includes the indication information.

In a possible implementation, the processing module 902 is further configured to not start the on duration of the C-DRX on a carrier to which the off duration of the DTX of the network device is applied.

In a possible implementation, the processing module 902 is further configured to, in a case where an end time of the off duration of the DTX of the network device equal to or later than an end time of the on duration of the C-DRX corresponding to the monitoring occasion of the set DCI, not start the on duration of the C-DRX corresponding to the monitoring occasion of the set DCI.

In a possible implementation, the DCI is set to carry a wake-up indication.

In a possible implementation, the processing module 902 is further configured to, in response to not monitoring the set DCI in the third overlapping region, not start the on duration of the C-DRX on all carrier(s) to which the wake-up indication is applied.

In a possible implementation, the processing module 902 is further configured to the set DCI is DCI 2-6.

In a possible implementation, the processing module 902 is further configured to run a timer in the C-DRX in the first overlapping duration.

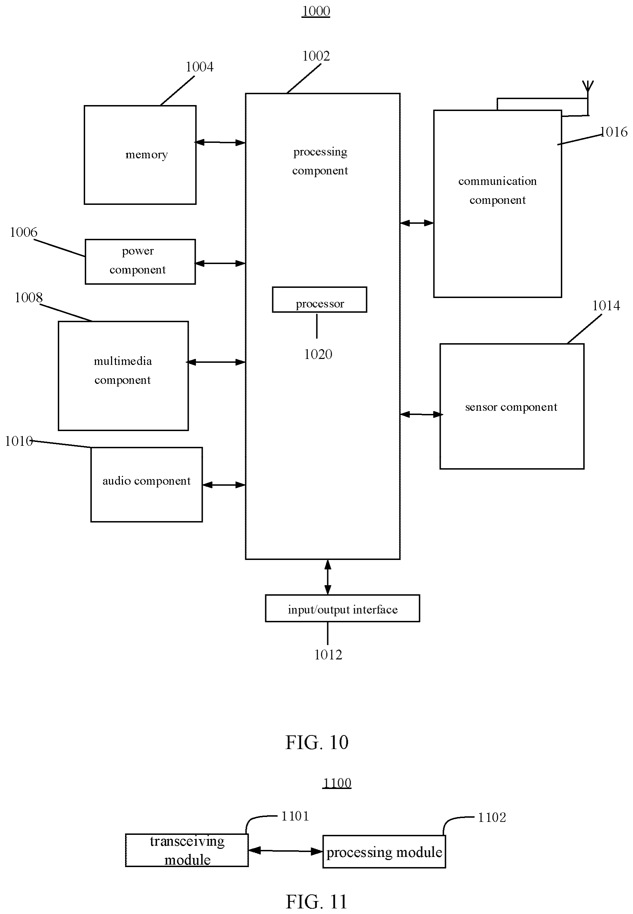

When the communication apparatus is user equipment 102, its structure may also be as shown in FIG. 10.

FIG. 10 is a block diagram of a monitoring apparatus 1000 according to an example embodiment. For example, the apparatus 1000 may be a mobile phone, a computer, a digital broadcast terminal, a messaging device, a gaming console, a tablet, a medical device, exercise equipment, a personal digital assistant, and the like.

Referring to FIG. 10, the apparatus 1000 may include one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 typically controls overall operations of the apparatus 1000, such as the operations associated with display, telephone calls, data communications, camera operations, and recording operations. The processing component 1002 may include one or more processors 1020 to execute instructions to perform all or part of the steps in the above described methods. Moreover, the processing component 1002 may include one or more modules which facilitate the interaction between the processing component 1002 and other components. For instance, the processing component 1002 may include a multimedia module to facilitate the interaction between the multimedia component 1008 and the processing component 1002.

The memory 1004 is configured to store various types of data to support the operation of the apparatus 1000. Examples of such data include instructions for any applications or methods operated on the apparatus 1000, contact data, phonebook data, messages, pictures, video, etc. The memory 1004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the apparatus 1000. The power component 1006 may include a power management system, one or more power sources, and any other components associated with the generation, management, and distribution of power in the apparatus 1000.

The multimedia component 1008 includes a screen providing an output interface between the apparatus 1000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1008 includes a front camera and/or a rear camera. The front camera and the rear camera may receive an external multimedia datum while the apparatus 1000 is in an operation mode, such as a photographing mode or a video mode. Each of the front camera and the rear camera may be a fixed optical lens system or have focus and optical zoom capability.

The audio component 1010 is configured to output and/or input audio signals. For example, the audio component 1010 includes a microphone ("MIC") configured to receive an external audio signal when the apparatus 1000 is in an operation mode, such as a call mode, a recording mode, and a voice recognition mode. The received audio signal may be further stored in the memory 1004 or transmitted via the communication component 1016. In some embodiments, the audio component 1010 further includes a speaker to output audio signals.

The I/O interface 1012 provides an interface between the processing component 1002 and peripheral interface modules, such as a keyboard, a click wheel, buttons, and the like. The buttons may include, but are not limited to, a home button, a volume button, a starting button, and a locking button.

The sensor component 1014 includes one or more sensors to provide status assessments of various aspects of the apparatus 1000. For instance, the sensor component 1014 may detect an open/closed status of the apparatus 1000, relative positioning of components, e.g., the display and the keypad, of the apparatus 1000, a change in position of the apparatus 1000 or a component of the apparatus 1000, a presence or absence of user contact with the apparatus 1000, an orientation or an acceleration/deceleration of the apparatus 1000, and a change in temperature of the apparatus 1000. The sensor component 1014 may include a proximity sensor configured to detect the presence of nearby objects without any physical contact. The sensor component 1014 may also include a light sensor, such as a CMOS or CCD image sensor, for use in imaging applications. In some embodiments, the sensor component 1014 may also include an accelerometer sensor, a gyroscope sensor, a magnetic sensor, a pressure sensor, or a temperature sensor.

The communication component 1016 is configured to facilitate communication, wired or wirelessly, between the apparatus 1000 and other devices. The apparatus 1000 can access a wireless network based on a communication standard, such as WiFi, 4G, or 5G, or a combination thereof. In one example embodiment, the communication component 1016 receives a broadcast signal or broadcast associated information from an external broadcast management system via a broadcast channel. In one example embodiment, the communication component 1016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the apparatus 1000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer-readable storage medium including instructions, such as the memory 1004 including instructions executable by the processor 1020 in the apparatus 1000, for performing the above-described methods. For example, the non-transitory computer-readable storage medium may be a ROM, a Random Access Memory (RAM), a CD-ROM, a magnetic tape, a floppy disc, an optical data storage device, and the like.

Based on the same concept as the above method embodiments, an embodiment of the present disclosure also provides a communication apparatus. The communication apparatus may have the function(s) of the network device in the above method embodiments, and may be configured to perform the steps performed by the network device provided in the above embodiments. The function(s) may be implemented by hardware, or by software or hardware executing corresponding software. The hardware or software includes one or more modules corresponding to the above function(s).

In a possible implementation, a communication apparatus 1100 shown in FIG. 11 may be used as the network device involved in the above method embodiments, and may perform the steps performed by the network device in the above method embodiments.

The communication apparatus 1100 includes a transceiving module 1101 and a processing module 1102.

The transceiving module 1101 is configured to, in a first overlapping duration, not send set downlink information on a carrier to which an off duration of a Discontinuous Transmission (DTX) mechanism of the network device is applied. The first overlapping duration is an overlapping region between a first duration and a second duration, the first duration is the off duration of the Discontinuous Transmission (DTX) of the network device, and the second duration is an active duration of a Connected mode Discontinuous Reception (C-DRX) of user equipment.

In a possible implementation, the transceiving module 1101 is further configured to send set downlink information in a second overlapping duration. The second overlapping duration is an overlapping region between a third duration and the second duration, and the third duration is an on duration of the DTX.

In a possible implementation, the set downlink information includes at least one of the following: a Physical Downlink Control Channel (PDCCH), a Channel-State-Information Reference Signal (CSI-RS), a Semi-Persistent Scheduling-Physical Downlink Shared Channel (SPS-PDSCH).

In a possible implementation, the PDCCH is a PDCCH transmitted in a Type# 3 Common Search Space (CSS) and a User equipment specific Search Space (USS).

In a possible implementation, the transceiving module 1101 is further configured to, in a third overlapping duration, not send set Downlink Control Information (DCI) in a third overlapping region. The third overlapping duration is an overlapping region between the first duration and a fourth duration, and the fourth duration is a duration for the user equipment to monitor the set DCI.

In a possible implementation, the transceiving module 1101 is further configured to send indication information to the user equipment. The indication information is used for the user equipment to determine whether to start an on duration of the C-DRX corresponding to a monitoring occasion of the set DCI.

In a possible implementation, the transceiving module 1101 is further configured to send higher layer signaling to the user equipment. The higher layer signaling includes the indication information.

In a possible implementation, the set DCI is used to carry a wake-up indication.

In a possible implementation, the set DCI is DCI 2-6.

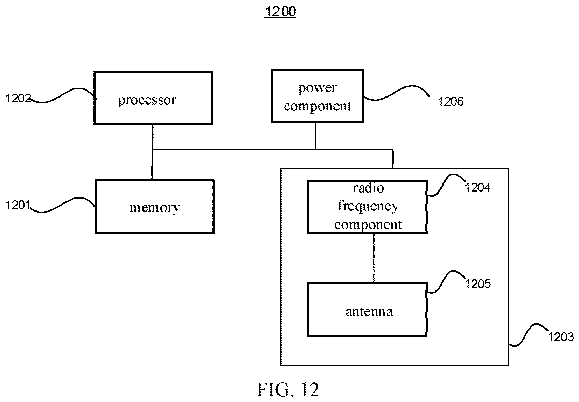

When the communication device is the network device 102, its structure may also be as shown in FIG. 12. As shown in FIG. 12, an apparatus 1200 includes a memory 1201, a processor 1202, a transceiving component 1203, and a power supply component 1206. The memory 1201 is coupled to the processor 1202, and may be used to store programs and data necessary for the communication apparatus 1200 to implement various functions. The processor 1202 is configured to support the communication apparatus 1200 to perform the corresponding functions in the above methods, and the functions may be implemented by invoking the programs stored in the memory 1201. The transceiving component 1203 may be a wireless transceiver, which may be used to support the communication apparatus 1200 to receive signaling and/or data through a wireless air interface, and send signaling and/or data. The transceiving component 1203 may also be referred to as a transceiving unit or a communication unit. The transceiving component 1203 may include a radio frequency component 1204 and one or more antennas 1205. The radio frequency component 1204 may be a Remote Radio Unit (RRU), which may be specifically used for transmission of radio frequency signals and conversion between radio frequency signals and baseband signals, and the one or more antennas 1205 may be specifically used for radiation and reception of radio frequency signals.

When the communication apparatus 1200 needs to send data, the processor 1202 may perform baseband processing on the data to be sent, and then output the baseband signal to the radio frequency unit. The radio frequency unit performs radio frequency processing on the baseband signal and then sends the radio frequency signal in the form of electromagnetic waves through the antenna(s). When there is data being sent to the communication apparatus 1200, the radio frequency unit receives a radio frequency signal through the antenna(s), converts the radio frequency signal into a baseband signal, and outputs the baseband signal to the processor 1202. The processor 1202 converts the baseband signal into data and processes the data.

Other implementations of the embodiments of the present disclosure will be apparent to those skilled in the art from consideration of the specification and practice of the present disclosure herein. The present disclosure is intended to cover any variations, uses, or adaptations of the embodiments of the present disclosure following the general principles thereof and including such departures from the present disclosure as come within known or customary practice in the art. It is intended that the specification and embodiments be considered as illustrative only, with a true scope and spirit of the embodiments of the present disclosure being indicated by the following claims.

It will be appreciated that embodiments of the present disclosure are not limited to the exact construction that has been described above and illustrated in the accompanying drawings, and that various modifications and changes can be made without departing from the scope thereof. It is intended that the scope of embodiments of the present disclosure only be limited by the appended claims.

### Industrial Applicability

When the network device adopts DTX and the UE adopts C-DRX, considering that the first overlapping duration is in the off duration of the DTX of the network device, that is, the network device does not send the set downlink information in the first overlapping duration, and the UE does not monitor the set downlink information in the first overlapping duration. In this way, the UE's monitoring behavior without a monitoring result in the first overlapping duration can be avoided, thereby saving the energy consumption of the UE.

## Claims

1. A monitoring method, performed by user equipment, the method comprising:
in a first overlapping duration, not monitoring set downlink information on a carrier to which an off duration of a Discontinuous Transmission (DTX) mechanism of a network device is applied, wherein the first overlapping duration is an overlapping region between a first duration and a second duration, the first duration is the off duration of the Discontinuous Transmission (DTX) of the network device, and the second duration is an active duration of a Connected mode Discontinuous Reception (C-DRX) of the user equipment.

2. The monitoring method according to claim 1, further comprising:
in a second overlapping duration, monitoring the set downlink information, wherein the second overlapping duration is an overlapping region between a third duration and the second duration, and the third duration is an on duration of the DTX.

3. The monitoring method according to claim 1 or 2, wherein:
the set downlink information comprises at least one of: a Physical Downlink Control Channel (PDCCH), a Channel-State-Information Reference Signal (CSI-RS), a Semi-Persistent Scheduling-Physical Downlink Shared Channel (SPS-PDSCH).

4. The monitoring method according to claim 3, wherein:
the PDCCH is a PDCCH transmitted in a Type# 3 Common Search Space (CSS) and a User equipment specific Search Space (USS).

5. The monitoring method according to any one of claims 1 to 4, further comprising:
in a third overlapping duration, not monitoring set Downlink Control Information (DCI) in the third overlapping region, wherein the third overlapping duration is an overlapping region between the first duration and a fourth duration, and the fourth duration is a duration for the user equipment to monitor the set DCI.

6. The monitoring method according to claim 5, further comprising:
according to indication information sent by the network device, determining whether to start an on duration of the C-DRX corresponding to a monitoring occasion of the set DCI.

7. The monitoring method according to claim 6, further comprising:
receiving higher layer signaling sent by the network device, wherein the higher layer signaling comprises the indication information.

8. The monitoring method according to claim 5, further comprising:
not starting the on duration of the C-DRX on the carrier to which the off duration of the DTX of the network device is applied.

9. The monitoring method according to claim 5, further comprising:
an end time of the off duration of the DTX of the network device being equal to or later than an end time of the on duration of the C-DRX corresponding to the monitoring occasion of the set DCI, not starting the on duration of the C-DRX corresponding to the monitoring occasion of the set DCI.

10. The monitoring method according to any one of claims 5 to 9, wherein the set DCI is used to carry a wake-up indication.

11. The monitoring method according to claim 10, further comprising:
in response to not monitoring the set DCI in the third overlapping region, not starting the on duration of the C-DRX on all carriers to which the wake-up indication is applied.

12. The monitoring method according to claim 10, wherein the set DCI is DCI 2-6.

13. The monitoring method according to any one of claims 1 to 11, further comprising:
running a timer in the C-DRX in the first overlapping duration.

14. A sending method, performed by a network device, the method comprising:
in a first overlapping duration, not sending set downlink information on a carrier to which an off duration of a Discontinuous Transmission (DTX) mechanism of the network device is applied, wherein the first overlapping duration is an overlapping region between a first duration and a second duration, the first duration is the off duration of the Discontinuous Transmission (DTX) of the network device, and the second duration is an active duration of a Connected mode Discontinuous Reception (C-DRX) of user equipment.

15. The sending method according to claim 14, further comprising:
in a second overlapping duration, sending the set downlink information, wherein the second overlapping duration is an overlapping region between a third duration and the second duration, and the third duration is an on duration of the DTX.

16. The sending method according to claim 14 or 15, wherein:
the set downlink information comprises at least one of: a Physical Downlink Control Channel (PDCCH), a Channel-State-Information Reference Signal (CSI-RS), a Semi-Persistent Scheduling-Physical Downlink Shared Channel (SPS-PDSCH).

17. The sending method according to claim 16, wherein:
the PDCCH is a PDCCH transmitted in a Type# 3 Common Search Space (CSS) and a User equipment specific Search Space (USS).

18. The sending method according to any one of claims 14 to 17, further comprising:
in a third overlapping duration, not sending set Downlink Control Information (DCI) in the third overlapping region, wherein the third overlapping duration is an overlapping region between the first duration and a fourth duration, and the fourth duration is a duration for the user equipment to monitor the set DCI.

19. The sending method according to claim 18, further comprising:
sending indication information to the user equipment, wherein the indication information is used for the user equipment to determine whether to start an on duration of the C-DRX corresponding to a monitoring occasion of the set DCI.

20. The sending method according to claim 18 or 19, wherein sending the indication information to the user equipment comprises:
sending higher layer signaling to the user equipment, wherein the higher layer signaling comprises the indication information.

21. The monitoring method according to any one of claims 18 to 20, wherein the set DCI is used to carry a wake-up indication.

22. The monitoring method according to claim 21, wherein the set DCI is DCI 2-6.

23. A monitoring apparatus, configured in user equipment, the apparatus comprising:
a transceiving module configured to, in a first overlapping duration, not monitor set downlink information on a carrier to which an off duration of a Discontinuous Transmission (DTX) mechanism of a network device is applied, wherein the first overlapping duration is an overlapping region between a first duration and a second duration, the first duration is the off duration of the Discontinuous Transmission (DTX) of the network device, and the second duration is an active duration of a Connected mode Discontinuous Reception (C-DRX) of the user equipment.

24. A sending apparatus, configured in a network device, the apparatus comprising:
a transceiving module configured to, in a first overlapping duration, not send set downlink information on a carrier to which an off duration of a Discontinuous Transmission (DTX) mechanism of the network device is applied, wherein the first overlapping duration is an overlapping region between a first duration and a second duration, the first duration is the off duration of the Discontinuous Transmission (DTX) of the network device, and the second duration is an active duration of a Connected mode Discontinuous Reception (C-DRX) of user equipment.

25. An electronic device, comprising a processor and a memory, wherein:
the memory is configured to store computer programs;
the processor is configured to execute the computer programs to implement the method according to any one of claims 1 to 13.

26. An electronic device, comprising a processor and a memory, wherein:
the memory is configured to store computer programs;
the processor is configured to execute the computer programs to implement the method according to any one of claims 14 to 22.

27. A computer-readable storage medium, wherein instructions are stored in the computer-readable storage medium, and when the instructions are invoked and executed on a computer, the computer is caused to implement the method according to any one of claims 1 to 13.

28. A computer-readable storage medium, wherein instructions are stored in the computer-readable storage medium, and when the instructions are invoked and executed on a computer, the computer is caused to implement the method according to any one of claims 14 to 22.
